# EUROPÄISCHE PATENTSCHRIFT

(11) **EP 3 081 406 B1**
(45) Veröffentlichungstag und Bekanntmachung des Hinweises auf die Patenterteilung: **05.12.2018**
(21) Anmeldenummer: 15163355.9
(22) Anmeldetag: 13.04.2015
(51) Int. Cl.: B60D 5/00, B62D 47/02, B61D 17/22

(54) **FALTENBALG EINES ÜBERGANGS ZWISCHEN ZWEI GELENKIG MITEINANDER VERBUNDENER FAHRZEUGE**
FOLDING BELLOWS FOR THE TRANSITION BETWEEN TWO VEHICLES WITH A JOINTED CONNECTION
SOUFFLET D'UN PASSAGE ENTRE DEUX VÉHICULES LIÉS DE MANIÈRE ARTICULÉE

(43) Veröffentlichungstag der Anmeldung: 19.10.2016
(73) Patentinhaber: Hübner GmbH & Co. KG, 34123 Kassel (DE)
(72) Erfinder: Mosaner, Knud, 34127 Kassel (DE); Heinrich, Marc, 200042 Shangai (CN)
(74) Vertreter: Patentanwälte Walther Hinz Bayer PartGmbB

(56) Entgegenhaltungen:
- EP-B1- 1 391 329
- DE-A1- 3 612 425
- US-A- 6 054 194

## Beschreibung

Die Erfindung betrifft einen Faltenbalg eines Übergangs zwischen zwei gelenkig miteinander verbundener Fahrzeuge oder Fahrzeugteile, z. B. einem Gelenkbus, wobei der Faltenbalg zwei Seitenwände aufweist, wobei die Seitenwände des Faltenbalges durch einen Balgboden miteinander verbunden sind, wobei der Faltenbalg im Übergangsbereich der Seitenwand zum Balgboden eine Mehrzahl von Einsatzfalteneinheiten aufweist, wobei die Seitenwand die Seitenwandfalten umfasst, wobei die Seitenwandfalten auf der Balgaußenseite jeweils einen Balgrahmen aufweisen.

Ein Faltenbalg eines Übergangs zwischen zwei gelenkig miteinander verbundener Fahrzeuge ist aus dem Stand der Technik hinreichend bekannt. So sind beispielsweise Gelenkbusse bekannt, die einen Übergang aufweisen, wobei der Übergang einen eine Übergangseinrichtung, z. B. eine Plattform, tunnelförmig umspannenden Faltenbalg umfasst. Der Faltenbalg umfasst allerdings nicht nur die Übergangseinrichtung, z. B. die Plattform, sondern ebenfalls das unter der Plattform befindliche Fahrzeuggelenk, sodass das Fahrzeuggelenk gegenüber Umwelteinflüssen geschützt ist. Ein solches Fahrzeuggelenk ist beispielsweise in der EP 2 738 071 A beschrieben. Dieses Fahrzeuggelenk besteht aus zwei Gelenksegmenten, die durch ein Drehlager miteinander verbunden sind. Seitlich weisen die beiden Gelenksegmente zwei Dämpfer auf, wobei die beiden Dämpfer schräg stehend die beiden Gelenksegmente verbinden. Das heißt, dass ein solches Fahrzeuggelenk sehr breit baut.

Die EP 0 653 319 B1 beschreibt bei einem Faltenbalg einen einstückigen Übergang von der Falte der Seitenwand als vertikalen Abschnitt in den horizontalen Abschnitt im Bodenbereich. Hierbei weist die Falte der Seitenwand eine längs des Scheitels auf der Innenseite des Balges verlaufende Naht auf, wobei sich die Naht lediglich bis an den Knickpunkt zwischen horizontalem und vertikalem Abschnitt des Übergangs von der Seitenwand zum Boden erstreckt, um ein Einknicken zu ermöglichen. Die Falte des horizontalen Abschnittes kann hierbei auf dem inneren Scheitel ebenfalls eine Naht aufweisen, die sich allerdings auch lediglich bis zum Knickpunkt erstreckt. Im Bereich der Knickung findet sich somit keine Naht.

Die DE 10 154 033 B4 zeigt den Übergangsbereich zwischen der Seitenwand eines Faltenbalges und dem horizontalen Ansatz, wobei die Verbindung zwischen dem horizontalen Ansatz und der vertikalen Seitenwand ähnlich ausgebildet ist, wie bei der EP 0 653 319. Dem horizontalen Abschnitt schließt sich ein herausnehmbarer Balgboden mit einem Bodentuch und Balgbügeln an, wobei die Balgbügel mit den Balgrahmen des Balges verbunden sind.

Ein Faltenbalg der eingangs genannten Art ist aus der EP 1 391 329 B1 bekannt. Der Faltenbalg zeigt hierbei im Übergangsbereich von der Seitenwand zum Balgboden im innenseitigen Scheitel des Übergangsbereichs des Faltenbalges bei einer Mehrzahl der Falten jeweils eine Einsatzfalteneinheit. Die Anordnung einer Einsatzfalteneinheit im Übergangsbereich einer jeden Falte von der Seitenwand zum Boden dient dazu, im Eckbereich des Balges eine im Wesentlichen gleiche Auszugsweite bereitzustellen wie im Bereich der Seitenwand. Die Einsatzfalteneinheit weist eine Mehrzahl von Falten oder Wellen auf, wobei die Tiefe der Falten der Einsatzfalteneinheit geringer ist, als die Gesamthöhe der Falten der Seitenwand. Hieraus wird deutlich, dass bei gleicher Auszugsweite der Boden flacher ist, als der Seitenwandbereich.

Bereits zu eingangs wurde erwähnt, dass das Fahrzeuggelenk relativ breit baut. Die Anordnung der Einsatzfalteneinheit gemäß der EP 1 391 329 B1 auf der Innenseite der jeweiligen Falten eines Faltenbalges und zwar im Bereich des Scheitels einer jeden Falte hat nun den Nachteil, dass sich die Wölbung der Einsatzfalteneinheit relativ weit in das Innere des Balges hineinerstreckt. Dies hat zur Folge, dass der Balg bei entsprechender Breite des Fahrzeuggelenkes mit diesem in Kontakt gerät, und zwar im Bereich des Anlenkpunktes des Dämpfers an dem entsprechenden Gelenksegment, was auf Dauer zu einem Verschleiß des Balges in diesem Bereich führt.

Die der Erfindung zugrunde liegende Aufgabe besteht nunmehr darin, die Breite des Balges, deren Maximum durch den Abstand der beiden Seitenwände des Balges bestimmt ist, auch im Übergangsbereich zum Balgboden bereitstellen zu können, wobei im Bodenbereich der Balg flach gehalten werden soll, um eine Niederflurigkeit des Fahrzeugs gewährleisten zu können.

Zur Lösung der Aufgabe wird erfindungsgemäß vorgeschlagen, dass jede Einsatzfalteneinheit auf der Innenseite des Balges zwischen der jeweiligen Seitenwandfalte verläuft, wobei die Einsatzfalteneinheit mindestens zwei horizontal verlaufende Einsatzfalten aufweist, die durch den Balgrahmen der Seitenwandfalte auf der Balgaußenseite erfasst sind, zwischen der die Einsatzfalteneinheit verläuft. Hieraus wird deutlich, dass die Einsatzfalteneinheit in den Bereich der Tiefe der Seitenwandfalte verlegt worden ist. Das heißt, dass außerhalb der Seitenwandfalte die Ausläufer der Einsatzfalteneinheit im Einbauzustand des Balges horizontal verlaufen. In der Praxis hat sich herausgestellt, dass sich die verfügbare Breite des Balges im Bereich des Balgbodens auf jeder Seite um ca. 5 cm zunimmt, dies gegenüber einem Balgaufbau, wie aus der EP 1 391 329 B1 bekannt ist.

Vorteilhafte Merkmale und Ausgestaltungen der Erfindung ergeben sich aus den Unteransprüchen.

So ist insbesondere vorgesehen, dass die Seitenwandfalten eine größere Tiefe, insbesondere die doppelte Tiefe aufweisen, wie die Einsatzfalten der Einsatzfalteneinheit.

Weiterhin zeigen die Einsatzfalten der Einsatzfalteneinheit Ober- und Unterkanten, die in den Balgrahmen der Seitenwandfalten auslaufen, zwischen denen oder in denen die jeweilige Einsatzfalteneinheit verläuft. Hieraus wird deutlich, dass die aus mindestens zwei Einsatzfalten bestehende Einsatzfalteneinheit in einem Punkt in den entsprechenden Balgrahmen der Seitenwandfalte ausläuft. Die Oberkanten der

Einsatzfalten der Einsatzfalteneinheit verlaufen hierbei im Einbauzustand horizontal, während die beiden Unterkanten zu beiden Seiten der Oberkanten schräg auf die Oberkanten zulaufen, und, wie bereits ausgeführt, in einem Punkt von dem jeweiligen Balgrahmen der Seitenwandfalte erfasst werden.

In diesem Zusammenhang ist im Einzelnen des Weiteren vorgesehen, dass der Balgrahmen der Seitenwandfalte zwischen der die Einsatzfalteneinheit verläuft, die gemeinsame Unterkante der beiden Einsatzfalten der Einsatzfalteneinheit erfasst. Hieraus wird deutlich, dass im Seitenwandbereich dieser Balgrahmen die Seitenwandfaltenschenkel der Seitenwandfalte erfasst, hingegen im horizontalen Bereich, dass heißt, im Bereich der Ecke des Balges, die gemeinsame Unterkante der Einsatzfalten der Einsatzfalteneinheit klemmend aufnimmt. Das heißt, die Anzahl der Balgrahmen bleibt auch im Bodenbereich gleich der im Seitenwandbereich, auch wenn die Anzahl der Falten selbst im Bodenbereich sich zwar bei geringerer Tiefe aber dennoch verdoppelt.

Des Weiteren ist vorgesehen, dass jede Seitenwandfalte und jede Einsatzfalte zwei Seitenwandfaltenschenkel und zwei Einsatzfaltenschenkel umfasst. Die Einsatzfalteneinheit weist mindestens zwei Einsatzfalten auf. Jeweils eine Falte der Einsatzfalteneinheit wird im Bereich der Seitenwandfaltenschenkeltiefe der Seitenwandfalte durch einen Teil des Seitenwandschenkels gebildet. Das bedeutet, dass der Seitenwandfaltenschenkel zur Bildung der Einsatzfalte im Bereich der Tiefe der Seitenwandfalte zweimal faltenförmig umgeschlagen wird, wobei die beiden benachbarten Schenkel der beiden Einsatzfalten der Einsatzfalteneinheit im horizontalen Bereich durch den Balgrahmen erfasst werden, der bereits im Bereich der Seitenwandfalten verläuft.

Um die durch Umschlagen des Seitenwandfaltenschenkels erzeugte Einsatzfalten eine dauerhafte Form zu geben, ist vorgesehen, im Bereich der Oberkante der Einsatzfalte eine längs der Einsatzfalte verlaufende Naht vorzusehen.

Anhand der Zeichnungen wird die Erfindung nachstehend beispielhaft näher erläutert.
- Fig. 1: zeigt schematisch einen Gelenkbus;
- Fig. 2: zeigt das die beiden Fahrzeuge verbindende Fahrzeuggelenk;
- Fig. 3: zeigt perspektivisch eine Ansicht von außen auf den Eckbereich eines Balges gemäß Fig. 1 im Übergang vom Seitenwandbereich in den Bodenbereich;
- Fig. 4: zeigt eine Ansicht von innen auf den Übergangsbereich zwischen Seitenwand und Boden des Faltenbalges (Eckbereich);
- Fig. 5: zeigt eine Darstellung gemäß Fig. 3 in gespreiztem Zustand;
- Fig. 6: zeigt eine Darstellung gemäß Fig. 4 in gespreiztem Zustand.

Die beiden Fahrzeugteile 1 und 2 des Gelenkbusses sind durch den Übergang 5 miteinander verbunden. Der Übergang 5 umfasst den Faltenbalg 10, der einerseits die Plattform 8 und andererseits das darunter befindliche Fahrzeuggelenk 7 tunnelförmig umspannt.

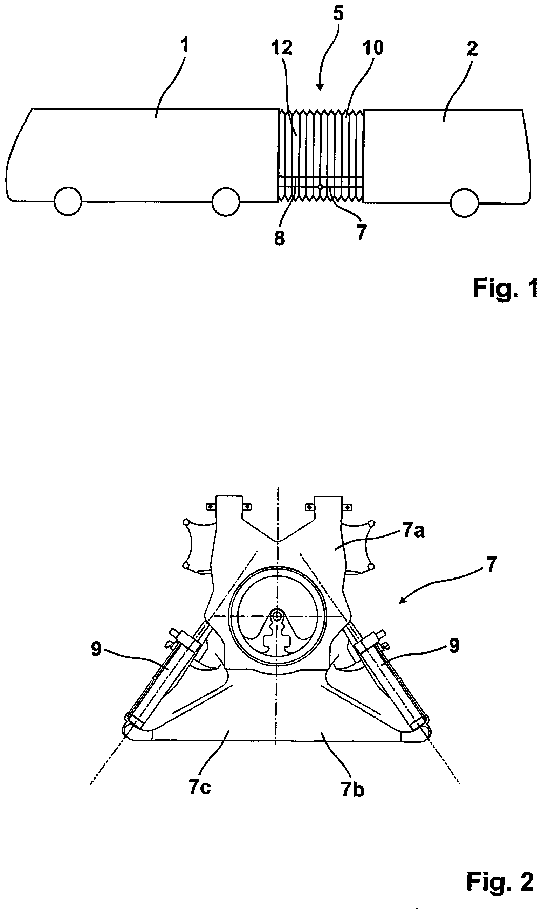

Das Fahrzeuggelenk 7 ist in Fig. 2 dargestellt. Das Fahrzeuggelenk 7 umfasst die beiden Gelenksegmente 7a und 7b, die durch ein Drehlager 7c miteinander in Verbindung stehen. Darüber hinaus weist das Fahrzeuggelenk 7 zu jeder Seite einen Dämpfer 9 auf, die schräg stehend die beiden Gelenksegmente 7a und 7b miteinander verbinden. Dieses Fahrzeuggelenk 7 befindet sich, wie dies bereits an anderer Stelle erläutert worden ist, innerhalb des Faltenbalges 10.

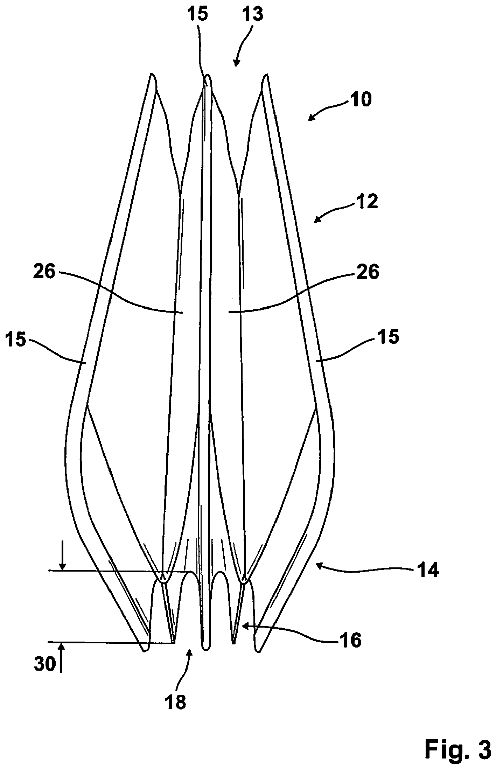

Fig. 3 zeigt einen Ausschnitt aus dem Faltenbalg 10 und zwar den Übergangsbereich oder Eckbereich von der Seitenwand zum Balgboden 16 in einer perspektivischen Ansicht von außen auf den Balg. Der Faltenbalg 10 weist im Bereich der Seitenwand mehrere Seitenwandfalten 13 auf. Eine jede Seitenwandfalte 13 wird gebildet durch zwei Seitenwandfaltenschenkel 26. Die beiden Seitenwandfaltenschenkel 26 umfassen einen Festigkeitsträger, insbesondere mindestens eine Gewebelage, die zu beiden Seiten mit einem Elastomer beschichtet ist. Die Seitenwandfaltenschenkel sind demzufolge elastisch verformbar. Auf der Außenseite des Faltenbalges sind jeweils die zwei Seitenwandfaltenschenkel 26 erfassende Balgrahmen 15 angeordnet. Im Übergangsbereich 14 von der Seitenwand 12 zu dem Balgboden 16 knicken die Balgrahmen im Winkel von etwa 90° ab, wie sich dies in Anschauung von Fig. 3 ergibt. Der Balgboden 16 stellt die Fortsetzung zu der Einsatzfalteneinheit zwischen den Seitenwandfaltenschenkeln 26 einer Seitenwandfalte 13 dar und ist nur teilweise dargestellt.

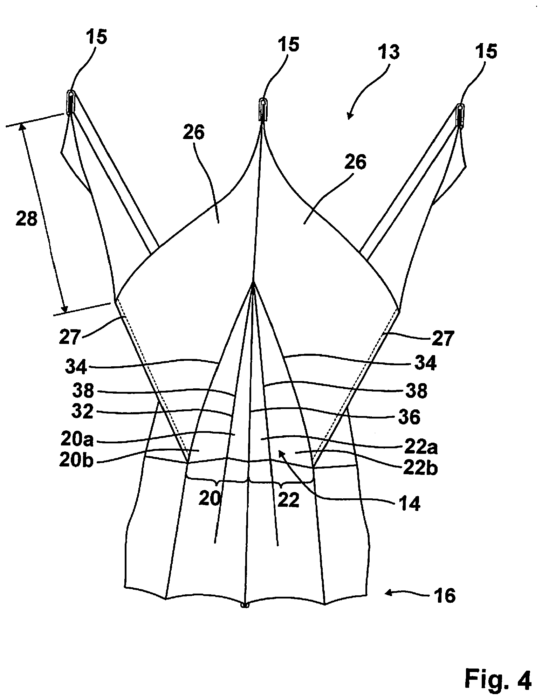

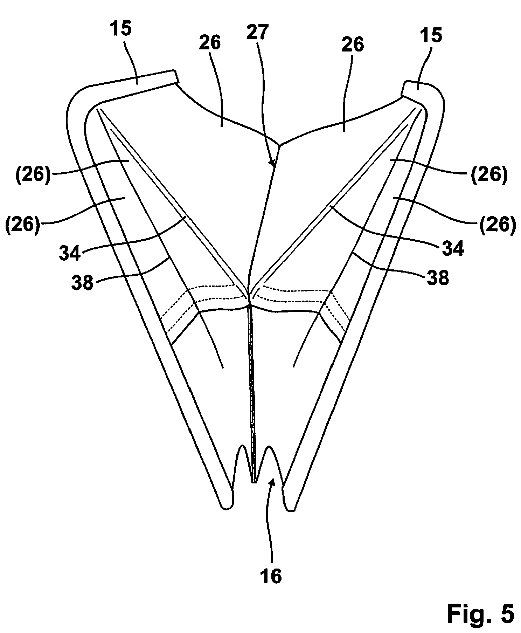

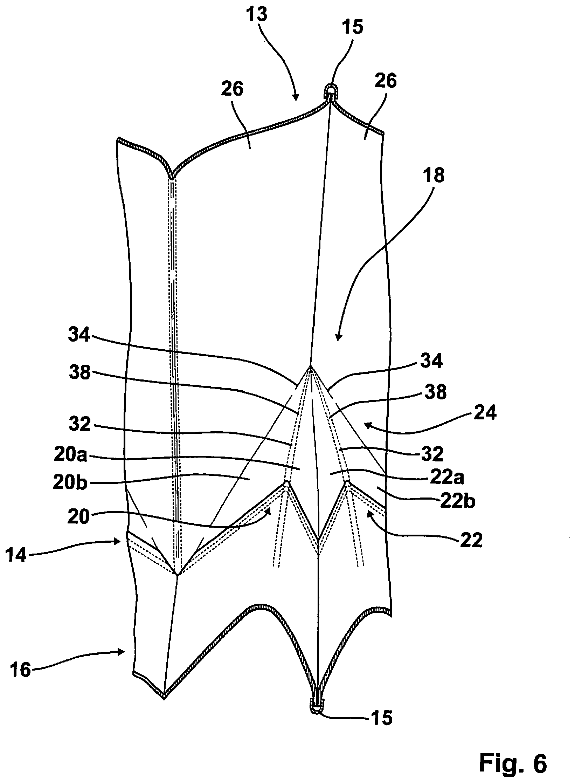

Im Folgenden wird nun eine Seitenwandfalte 13 betrachtet, wobei zwischen der Seitenwandfalte 13, dass heißt, zwischen den beiden Seitenwandfaltenschenkeln der Seitenwandfalte 13 auf der Balginnenseite 24 die Einsatzfalteneinheit 18 verläuft. Die Einsatzfalteneinheit 18 umfasst die beiden Einsatzfalten 20 und 22, wie sich dies in Anschauung von Fig. 4 ergibt. Die Tiefe 28 der Seitenwandfalte ist hierbei etwa doppelt so groß wie die Tiefe 30 der Einsatzfalte. Eine jede Einsatzfalte 20, 22 zeigt zwei Einsatzfaltenschenkel, nämlich die Einsatzfaltenschenkel 20a, 20b und 22a, 22b. Die beiden Einsatzfaltenschenkel 20a, 20b und 22a, 22b bilden jeweils eine Oberkante 32, die im Bereich der Seitenwandfaltenschenkel 26 im Einbauzustand des Balges im Wesentlichen horizontal verläuft. In Verbindung mit dem Seitenwandfaltenschenkel 26 bildet der Einsatzfaltenschenkel 20a bzw. der Einsatzfaltenschenkel 22a eine Unterkante 34 mit dem Seitenwandfaltenschenkel 26, wobei die Unterkante 34 schräg nach oben auf den Balgrahmen 15 zu verläuft, und zusammen mit der Oberkante 32 der Einsatzfalteneinheit durch den Balgrahmen in einem Punkt erfasst wird. Wesentlich hierbei ist, dass die Einsatzfalte 20 sowie die Einsatzfalte 22 durch den jeweils unmittelbar benachbarten Seitenwandfaltenschenkel 26 gebildet wird, weshalb diese Teile in Klammern in der Zeichnung dargestellt sind. Das heißt, dass der Seitenwandfaltenschenkel 26, der zur Bildung der jeweiligen Einsatzfalte 20, 22 nach unten frei übersteht, zu der Einsatzfalte 20, 22 zweimal geknickt oder umgeschlagen wird, wobei die beiden freien Schenkel der beiden Einsatzfalten 20, 22 eine gemeinsame Unterkante 36 der Einsatzfalteneinheit bilden, die wiederum durch den horizontal verlaufenden Teil des Balgrahmens 15 erfasst wird (Fig. 5, Fig. 6). Das heißt, die Einsatzfaltenschenkel 20a, 20b, 22a, 22b sind physisch Teil des entsprechenden Seitenwandfaltenschenkels 26. Zur Formgebung der jeweiligen Einsatzfalte 20, 22 weist die Oberkante 32 der Einsatzfalten 20, 22 jeweils eine Naht 38 auf. Die Naht 38 verläuft jeweils längs der Einsatzfalten 20, 22. Hieraus wird deutlich, dass die Naht 38 die Einsatzfaltenschenkel 20a, 20b und 22a, 22b erfasst. Zur Formgebung weist in diesem Zusammenhang auch die Seitenwandfalte 13 auf der Balginnenseite eine längs der Seitenwandfalte 13 verlaufende Naht 27 auf.

### Bezugszeichenliste:

- 1: Fahrzeugteil
- 2: Fahrzeugteil
- 5: Übergang
- 7: Fahrzeuggelenk
- 7a: Gelenksegment
- 7b: Gelenksegment
- 7c: Drehlager
- 8: Plattform
- 9: Dämpfer
- 10: Faltenbalg
- 12: Seitenwand
- 13: Seitenwandfalte
- 14: Übergangsbereich (Eckbereich)
- 15: Balgrahmen
- 16: Balgboden
- 18: Einsatzfalteneinheit
- 20: Einsatzfalte
- 20a: Einsatzfaltenschenkel
- 20b: Einsatzfaltenschenkel
- 22: Einsatzfalte
- 22a: Einsatzfaltenschenkel
- 22b: Einsatzfaltenschenkel
- 24: Balginnenseite
- 26: Seitenwandfaltenschenkel
- 27: Naht auf der Oberkante der Seitenwandfalte
- 28: Tiefe der Seitenwandfalte
- 30: Tiefe der Seitenwandfalte
- 32: Oberkante Einsatzfalte
- 34: gemeinsame Unterkante Einsatzfalten
- 36: Unterkante der Einsatzfalten
- 38: Naht auf der Oberkante der Einsatzfalte

## Patentansprüche

1. Faltenbalg (10) eines Übergangs (5) zwischen zwei gelenkig miteinander verbundener Fahrzeuge oder Fahrzeugteile (1, 2), z.B. eines Gelenkbusses, wobei der Faltenbalg (10) zwei Seitenwände (12) aufweist, wobei die Seitenwände (12) des Faltenbalges (10) durch einen Balgboden (16) miteinander verbunden sind, wobei der Faltenbalg (10) im Übergangsbereich (14) der Seitenwand (12) zum Balgboden (16) eine Mehrzahl von Einsatzfalteneinheiten (18) aufweist, wobei die Seitenwand (12) Seitenwandfalten (13) umfasst, wobei die Seitenwandfalten (13) auf der Balgaußenseite jeweils einen Balgrahmen (15) aufweisen,
**dadurch gekennzeichnet,**
**dass** jede Einsatzfalteneinheit (18) auf der Balginnenseite (24) zwischen der jeweiligen Seitenwandfalte (13) verläuft, wobei die Einsatzfalteneinheit (18) mindestens zwei horizontal verlaufende Einsatzfalten (20, 22) aufweist, die durch den Balgrahmen (15) der Seitenwandfalte (13) auf der Balgaußenseite erfasst sind, zwischen der die Einsatzfalteneinheit (18) verläuft.

2. Faltenbalg (10) eines Übergangs zwischen zwei gelenkig miteinander verbundener Fahrzeuge (1, 2) nach Anspruch 1,
**dadurch gekennzeichnet,**
**dass** die Seitenwandfalten (13) eine größere Tiefe (28) aufweisen, als die Einsatzfalten (20, 22).

3. Faltenbalg (10) eines Übergangs zwischen zwei gelenkig miteinander verbundener Fahrzeuge nach Anspruch 2,
**dadurch gekennzeichnet,**
**dass** die Einsatzfalten (20, 22) der Einsatzfalteneinheit (18) etwa halb so tief sind wie die Seitenwandfalten (13).

4. Faltenbalg (10) eines Übergangs zwischen zwei gelenkig miteinander verbundener Fahrzeuge (1, 2) nach einem der voranstehenden Ansprüche,
**dadurch gekennzeichnet,**
**dass** die Einsatzfalten (20, 22) der Einsatzfalteneinheit (18) Ober- und Unterkanten (32, 36) aufweisen, die in den Balgrahmen (15) der jeweiligen Seitenwandfalte (13) auslaufen, zwischen der die Einsatzfalteneinheit (18) verläuft.

5. Faltenbalg (10) eines Übergangs zwischen zwei gelenkig miteinander verbundener Fahrzeuge (1, 2) nach Anspruch 4,
**dadurch gekennzeichnet,**
**dass** der Balgrahmen (15) der Seitenwandfalte (13), zwischen der die Einsatzfalteneinheit (18) verläuft, die gemeinsame Unterkante (36) der Einsatzfalten (20, 22) der Einsatzfalteneinheit (18) erfasst.

6. Faltenbalg (10) eines Übergangs zwischen zwei gelenkig miteinander verbundener Fahrzeuge (1, 2) nach einem der voranstehenden Ansprüche,
**dadurch gekennzeichnet,**
**dass** jede Seitenwandfalte (13) und jede Einsatzfalte (20, 22) zwei Seitenwandfaltenschenkel(26) und zwei Einsatzfaltenschenkel (20a, 20b; 22a, 22b) umfasst, wobei die Einsatzfalteneinheit (18) zwei Einsatzfalten (20, 22) aufweist, wobei jeweils eine Falte der Einsatzfalteneinheit (18) im Bereich der Seitenwandfaltenschenkeltiefe der Seitenwandfalte (13) durch einen Teil des Seitenwandfaltenschenkels (26) gebildet ist.

7. Faltenbalg (10) eines Übergangs zwischen zwei gelenkig miteinander verbundener Fahrzeuge (1, 2) nach Anspruch 6,
**dadurch gekennzeichnet,**
**dass** zur Formgebung der Einsatzfalten (20, 22) der Einsatzfalteneinheit (18) die die jeweilige Einsatzfalte (20, 22) bildenden Einsatzfaltenschenkel (20a, 20b; 22a, 22b) im Bereich der Oberkante (32) der Einsatzfalte (20, 22) eine längs der Einsatzfalte (20, 22) verlaufende Naht (38) aufweisen.

## Claims

1. A folding bellows (10) of a gangway (5) between two articulately connected vehicles or vehicle parts (1, 2), e.g. of an articulated bus, wherein the folding bellows (10) comprises two lateral walls (12), wherein the lateral walls (12) of the folding bellows (10) are connected with each other by a bellows floor (16), wherein the folding bellows (10) comprises a plurality of insert fold units (18) in the transition area (14) from the lateral wall (12) to the bellows floor (16), wherein the lateral wall (12) includes lateral wall folds (13), wherein the lateral wall folds (13) comprise respectively one bellows frame (15) on the exterior of the bellows,
**characterized in that**
each insert fold unit (18) extends on the bellows interior (24) between the respective lateral wall folds (13), wherein the insert fold unit (18) comprises at least two horizontally extending insert folds (20, 22), which are held by the bellows frame (15) of the lateral wall fold (13) on the exterior of the bellows, between which the insert fold unit (18) extends.

2. The folding bellows (10) of a gangway between two articulately connected vehicles (1, 2) according to claim 1,
**characterized in that**
the lateral wall folds (13) have a greater depth (28) than the insert folds (20, 22).

3. The folding bellows (10) of a gangway between two articulately connected vehicles (1, 2) according to claim 2,
**characterized in that**
the insert folds (20, 22) of the insert fold unit (18) are approximately half as deep as the lateral wall folds (13).

4. The folding bellows (10) of a gangway between two articulately connected vehicles (1, 2) according to one of the afore-mentioned claims,
**characterized in that**
the insert folds (20, 22) of the insert fold unit (18) comprise upper and lower edges (32, 36), which end in the bellows frame (15) of the respective lateral wall fold (13), between which the insert fold unit (18) extends.

5. The folding bellows (10) of a gangway between two articulately connected vehicles (1, 2) according to claim 4,
**characterized in that**
the bellows frame (15) of the lateral wall fold (13), between which the insert fold unit (18) extends, holds the common lower edge (36) of the insert folds (20, 22) of the insert fold unit (18).

6. The folding bellows (10) of a gangway between two articulately connected vehicles (1, 2) according to one of the afore-mentioned claims,
**characterized in that**
each lateral wall fold (13) and each insert fold (20, 22) includes two lateral wall fold flanks (26) and two insert fold flanks (20a, 20b; 22a, 22b), wherein the insert fold unit (18) comprises two insert folds (20, 22), wherein respectively one fold of the insert fold unit (18) is formed, in the area of the lateral wall fold flank depth of the lateral wall fold (13), by a part of the lateral wall fold flank (26).

7. The folding bellows (10) of a gangway between two articulately connected vehicles (1, 2) according to claim 6,
**characterized in that**
for shaping the insert folds (20, 22) of the insert fold unit (18), the insert fold flanks (20a, 20b; 22a, 22b) forming the respective insert fold (20, 22) comprise a seam (38) in the area of the upper edge (32) of the insert fold (20, 22) that extends along the insert fold (20, 22).

## Revendications

1. Soufflet plissé (10) d'un passage (5) entre deux véhicules ou parties de véhicules (1, 2), par ex. d'un bus articulé, reliés de manière articulée, le soufflet plissé (10) comportant deux parois latérales (12), les parois latérales (12) du soufflet plissé (10) étant reliées par un plancher de soufflet (16), le soufflet plissé (10) comportant une pluralité d'unités de plis d'insertion (18) dans la zone de transition (14) de la paroi latérale (12) au plancher de soufflet, la paroi latérale (12) comprenant des plis de paroi latérale (13), les plis de paroi latérale (13) comportant respectivement un cadre de soufflet (15) à l'extérieur du soufflet,
**caractérisé en ce que**
chaque unité de plis d'insertion (18) s'étend à l'intérieur du soufflet (24) entre le pli de paroi latérale respectif (13), l'unité de plis d'insertion (18) comportant au moins deux plis d'insertion (20, 22) s'étendant horizontalement qui sont maintenus par le cadre de soufflet (15) du pli de paroi latérale (13) à l'extérieur du soufflet, dans lequel s'étend l'unité de plis d'insertion (18).

2. Soufflet plissé (10) d'un passage entre deux véhicules (1, 2) reliés de manière articulée selon la revendication 1,
**caractérisé en ce que**
les plis de paroi latérale (13) présentent une plus grande profondeur (28) que les plis d'insertion (20, 22).

3. Soufflet plissé (10) d'un passage entre deux véhicules (1, 2) reliés de manière articulée selon la revendication 2,
**caractérisé en ce que**
les plis d'insertion (20, 22) de l'unité de plis d'insertion (18) sont approximativement moitié moins profonds que les plis de paroi latérale (13).

4. Soufflet plissé (10) d'un passage entre deux véhicules (1, 2) reliés de manière articulée selon l'une des revendications précédentes,
**caractérisé en ce que**
les plis d'insertion (20, 22) de l'unité de plis d'insertion (18) comporte des bords supérieur et inférieur (32, 36) qui se terminent au niveau du cadre de soufflet (15) du pli de paroi latéral (13) respectif, dans lequel s'étend l'unité de plis d'insertion (18).

5. Soufflet plissé (10) d'un passage entre deux véhicules (1, 2) reliés de manière articulée selon la revendication 4,
**caractérisé en ce que**
le cadre de soufflet (15) du pli de paroi latérale (13), dans lequel s'étend l'unité de plis d'insertion (18), maintient le bord inférieur (36) commun des plis d'insertion (20, 22) de l'unité de plis d'insertion (18).

6. Soufflet plissé (10) d'un passage entre deux véhicules (1, 2) reliés de manière articulée selon l'une des revendications précédentes,
**caractérisé en ce que**
chaque pli de paroi latérale (13) et chaque pli d'insertion (20, 22) comprend deux côtés de pli de paroi latérale (26) et deux côtés de pli d'insertion (20a, 20b ; 22a, 22b), l'unité de plis d'insertion (18) comportant deux plis d'insertion (20, 22), un pli respectif de l'unité de plis d'insertion (18) étant formé, dans la région de la profondeur du côté de pli de paroi latérale du pli de paroi latérale (13), par une partie du côté du pli de paroi latérale (26).

7. Soufflet plissé (10) d'un passage entre deux véhicules (1, 2) reliés de manière articulée selon la revendication 6,
**caractérisé en ce que**
pour façonner les plis d'insertion (20, 22) de l'unité de plis d'insertion (18), les côtés de pli d'insertion (20a, 20b ; 22a, 22b) formant le pli d'insertion (20, 22) respectif comportent une couture s'étendant le long du pli d'insertion (20, 22) dans la région du bord supérieur (32) du pli d'insertion (20, 22).
